# EUROPEAN PATENT APPLICATION

(11) **EP 3 447 402 A2**
(43) Date of publication of application: **27.02.2019**
(21) Application number: 18186613.8
(22) Date of filing: 31.07.2018
(51) Int. Cl.: F24F 13/20, F24F 6/12, F24F 6/00, F24F 11/77, F24F 11/74

(54) **HUMIDIFIER WITH A LIQUID TANK**

(30) Priority: 01.08.2017 US 201715665611
(71) Applicant: D-M-S Holdings, Inc., West Des Moines, Iowa 50266 (US)
(72) Inventor: ATKINS, Billy Terrell Jr., Antioch, IL 60002 (US); KONDAVEETI, Swapna, Gurnee, IL 60031 (US); BRADLEY, Samuel, Mundelein, IL Illinois 60060 (US)
(74) Representative: Howe, Steven

(57) **Abstract**

Humidifier and related method embodiments and disclosed herein. A humidifier includes a base, a fluid column, a liquid tank, a lid, and a sealing assembly. The base has a liquid reservoir and is configured to generate mist. The fluid column is in fluid communication with the liquid reservoir and selectively in fluid communication with an ambient atmosphere to deliver mist to the ambient atmosphere. The liquid tank is coupled to the base and defines an interior volume. The liquid tank is configured to provide liquid to the liquid reservoir. The lid is selectively sealed to the fluid column and covers the liquid tank. The sealing assembly is coupled to the fluid column. The sealing assembly is configured, upon actuation, to both seal the fluid column from the ambient atmosphere to prevent delivery of mist to the ambient atmosphere and unseal the lid from the fluid column.

## Description

### TECHNICAL FIELD

This disclosure generally relates to humidifiers and methods associated with humidifiers.

### BACKGROUND

Low humidity in an ambient environment may cause discomfort and, in some instances, health-related issues (e.g., respiratory issues). To increase the moisture content of air in an ambient environment, a humidifier can be used. A humidifier can be supplied with water and operate to output a mist into the ambient environment, thereby increasing the ambient environment's moisture content.

Currently available humidifiers can be limited in their design. Generally, currently available humidifiers include a fluid supply storage component. The fluid supply storage component can hold and supply water to the humidifier during operation and may be refilled with water by a user as needed. However, the design of such currently available humidifiers can make it difficult to access an interior of the fluid supply storage component. In many cases, the only opening to the interior of the fluid supply storage component is a small port used for both refilling and supplying water to the humidifier. The size of such port may substantially prevent access to the interior of the fluid supply storage component for cleaning or other maintenance. Moreover, the design of such currently available humidifiers may lack features useful for safeguarding humidifier components. For example, the design of currently available humidifiers may lack the ability to recognize the existence of certain operational states, such as refilling of the fluid supply storage component. Accordingly, such humidifiers may not have the capability to safeguard certain humidifier components during these operational states.

### SUMMARY

In general, various exemplary embodiments relating to humidifiers, and methods associated with humidifiers, are disclosed herein. Certain embodiments can be useful, for instance, in providing convenient access to an interior volume of a humidifier liquid tank that serves to store liquid for use by the humidifier. This may include a humidifier having a lid component that is selectively removable from the liquid tank. When present, the lid component can be selectively sealed to, and cover, the liquid tank to prevent water being held within the liquid tank from spoiling over time. Moreover, when the lid is unsealed from the liquid tank, certain humidifier embodiments can seal one or more fluid pathways of the humidifier to prevent undesirable water ingress along such fluid pathways. This can be useful, for instance, when the lid is removed in order to refill the liquid tank.

Furthermore, various embodiments can be useful, for instance, in changing one or more humidifier parameters by detecting that a particular operational state exists. As one example, a humidifier may detect that its liquid tank is being refilled and, as a result, act to change one or more appropriate parameters of the humidifier. This may include reducing power to (e.g., turning off) a fan component and/or an atomizer component of the humidifier while the operation state is detected. For instance, the humidifier can detect that a liquid tank is being refilled by detecting that the sealing assembly of the humidifier has been moved to a different position. In this way, a user may not need to take action to adjust parameters of the humidifier prior to, or during, refilling of the liquid tank. Moreover, the humidifier may automatically act to safeguard various appropriate humidifier components during a variety of detected operational states. This may increase the operational life of a humidifier and may increase an operational efficiency of a humidifier.

One exemplary embodiment includes a humidifier. This humidifier embodiment includes a base, a fluid column, a liquid tank, a lid, and a sealing assembly. The base has a liquid reservoir and the base is configured to generate mist. The fluid column is in fluid communication with the liquid reservoir and selectively in fluid communication with an ambient atmosphere to deliver mist to the ambient atmosphere. The liquid tank is coupled to the base and the liquid tank defines an interior volume. The liquid tank is configured to provide liquid to the liquid reservoir. The lid is selectively sealed to the fluid column and covers the liquid tank. The sealing assembly is coupled to the fluid column. The sealing assembly is configured, upon actuation, to both seal the fluid column from the ambient atmosphere to prevent delivery of mist to the ambient atmosphere and unseal the lid from the fluid column.

In a further embodiment of this humidifier, the base includes a fan and a controller. In this further humidifier embodiment, the fan is in fluid communication with the fluid column to deliver mist through the fluid column to the ambient atmosphere. The controller is in signal communication with the fan. The controller is configured to measure fan speed at a first time and a second time. The controller is further configured to change a supply of power to the fan when a difference between fan speed at the first time and the second time exceeds a predetermined amount. For instance, the second time could be when the sealing assembly seals the fluid column from the ambient atmosphere and the controller could reduce the supply of power to the fan.

Another exemplary embodiment includes a method. This method embodiment includes providing a humidifier, actuating a sealing assembly, measuring a speed of a fan, and changing an amount of power supplied to the fan based on the measured speed of the fan. The provided humidifier includes a base that is configured to generate mist. The base includes a liquid reservoir, the fan, a fluid column, and the sealing assembly. The fluid column is in fluid communication with the liquid reservoir to deliver mist to an ambient atmosphere. The sealing assembly is coupled to the fluid column. Actuating the sealing assembly includes actuating the sealing assembly to a first position to seal the liquid reservoir from the ambient environment. As one example, the fan speed can be measured at a first time and a second time and the amount of power supplied to the fan can be decreased when a difference between fan speed at the first and second times exceeds a first predetermined amount. For instance, the second time may be when the sealing assembly is in the first position. The first time may, in one case, be when the sealing assembly is in a second position where the liquid reservoir is unsealed from, and thus in fluid communication with, the ambient atmosphere.

This disclosure is filed concurrently with the following three patent applications that are owned by the owner of this disclosure: US Pat. App. No. 15/665,611, titled "Humidifier Measurement and Control"; US Pat. App. No. 15/665,614, titled "Humidifier Reservoir Fluid Control"; and US Pat. App. No. 15/665,616, titled "Humidifier User Interaction".

The details of one or more examples are set forth in the accompanying drawings and the description below. Other features, objects, and advantages will be apparent from the description and drawings.

### BRIEF DESCRIPTION OF THE DRAWINGS

The following drawings are illustrative of particular embodiments of the present invention and therefore do not limit the scope of the invention. The drawings are intended for use in conjunction with the explanations in the following description. Embodiments of the invention will hereinafter be described in conjunction with the appended drawings, wherein like numerals denote like elements.
FIG. 1A is a perspective view of an exemplary embodiment of a humidifier.
FIG. 1B is a perspective view of an alternative exemplary embodiment of a humidifier.
FIG. 2 is a separated, perspective view of the exemplary humidifier of FIG. lAin which a liquid tank is removed from a base portion.
FIG. 3 is a perspective view of an underside of the exemplary liquid tank of FIG. 2.
FIG. 4 is a perspective view of the exemplary base portion of FIG. 2.
FIGS. 5A and 5B are cross-sectional views of the exemplary liquid tank of FIG. 2 taken along line A-A in FIG. 2. FIG. 5A shows a sealing assembly in one exemplary position, while
FIG. 5B shows the sealing assembly in another exemplary position.
FIG. 6 is a schematic diagram showing exemplary communication between various components within the exemplary humidifier of FIG. 1A.
FIG. 7 is a flow diagram showing an exemplary embodiment of a process associated with a humidifier.

### DETAILED DESCRIPTION

The following detailed description is exemplary in nature and is not intended to limit the scope, applicability, or configuration of the invention in any way. Rather, the following description provides some practical illustrations for implementing exemplary embodiments of the present invention. Examples of constructions, materials, and/or dimensions are provided for selected elements. Those skilled in the art will recognize that many of the noted examples have a variety of suitable alternatives.

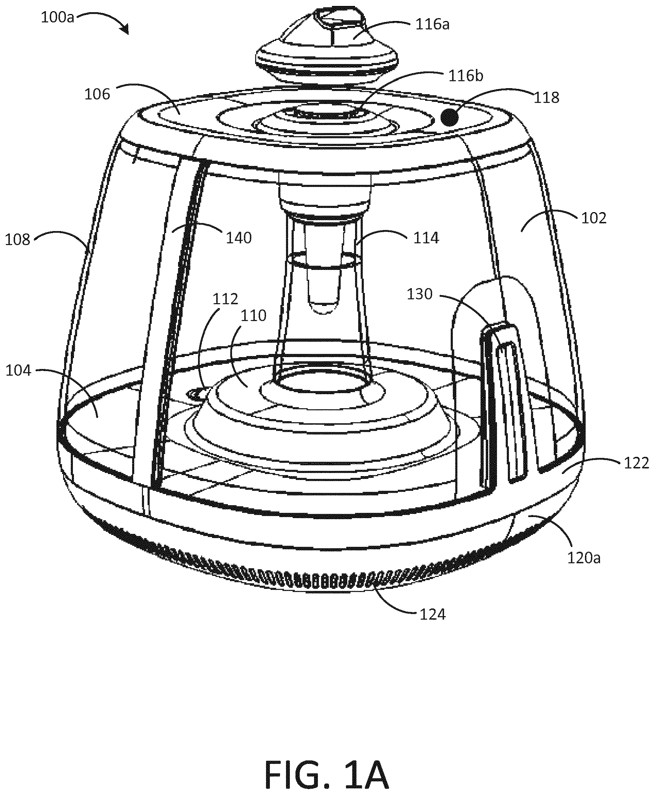

FIG. 1A is a perspective view of an exemplary embodiment of a humidifier 100a. As shown, the humidifier 100a includes a liquid (e.g., water) tank 102. The liquid tank 102 defines a first interior volume therein that can store a supply of water or other liquid for use by the humidifier 100a. Liquid tank 102 includes a floor 104, a lid 106, and a sidewall 108 extending between the floor 104 and the lid 106. In one example, the first interior volume of the liquid tank 102 can be defined by the sidewall 108 between the floor 104 and the lid 106. In the illustrated embodiment of FIG. 1A, the sidewall 108 substantially surrounds the perimeter of the humidifier 100a. However, it will be appreciated that in various embodiments, the liquid tank 102 need not necessarily extend to the outer limits of the humidifier 100a. That is, in some examples, the sidewall 108 of the liquid tank 102 does not necessarily surround or follow the perimeter of the humidifier 100a. In the illustrative example of FIG. 1A, sidewall 108 is shown as clear. In some examples, the sidewall 108 may be clear, transparent, translucent, or the like so that a user may readily observe certain parameters, such as the level of liquid within the liquid tank 102. In other examples, the sidewall 108 may be opaque.

In the example of FIG. 1A, the floor 104 of the liquid tank 102 can enclose, at least in part, a reservoir 110 (below the surface) in which liquid can be stored for more immediate use by the humidifier 100a than the liquid in the liquid tank 102. That is, in some examples, humidifier 100a uses liquid in the reservoir 110 to humidify the environment surrounding the humidifier 100a, while liquid from the liquid tank 102 is used to replenish the reservoir 110 as appropriate. In the example of FIG. 1A, the humidifier 100a includes a selective sealing component 112 disposed in the floor 104 of the liquid tank 102 to facilitate communication of liquid to the reservoir 110 from the first interior volume of the liquid tank 102.

Humidifier 100a includes a fluid column 114 through which atomized liquid can travel from the reservoir 110 out of the humidifier 100a. The column 114 can extend within the interior volume of the liquid tank 102. As shown in the example of FIG. 1A, the column 114 is centered within the liquid tank 102. The lid 106 can include a cap (e.g., 116a, 116b) disposed over the column 114 to control the emission of mist (e.g., water). For example, a directional cap 116a can be used to emit mist in a preferred direction from the humidifier 100a. In other examples, a domed cap 116b can provide substantially radially uniform mist emission. In some embodiments, such caps can be interchangeable for desired operation by the user.

The lid 106 can be removable from the tank 102. When present, as shown in FIG. 1A, the lid 106 can be sealed to the column 114 and cover the tank 102. When the lid 106 is to be removed, the lid 106 can be unsealed from the fluid column 114 and lifted off of the tank 102. To selectively seal the lid 106 to the column 114, the exemplary embodiment of the humidifier 100a includes a sealing assembly 117. The sealing assembly 117 can be coupled to the column 114 and be configured to actuate between two or more positions. For instance, in one position the sealing assembly 117 can seal the lid 106 to the column 114 and in another position the sealing assembly 117 can unseal the lid 106 from the column 114. In one embodiment, the sealing assembly can be actuated between positions by user input. This may include, as one example, a user pushing on the sealing assembly 117. In addition, the sealing assembly 117 can be configured upon actuation to seal the column 114 from the ambient atmosphere and thereby prevent delivery of mist to the ambient atmosphere. For instance, the sealing assembly 117 can be configured upon actuation to seal the column 114 from the ambient atmosphere when it unseals the lid 106 from the column 114.

In the illustrated embodiment, the lid 106 of the tank 102 includes a burp valve 118. The burp valve 118 can allow for fluid communication between the first interior volume of the tank 102 and an ambient environment. In one example, the burp valve 118 can be actuated between a first position that allows for such fluid communication thereat and a second positon that seals the first interior volume from the ambient environment thereat. The burp valve 118 may, as an example, be a self-actuated pressure control valve such that it is configured to actuate from the second position to the first position when a pressure within first interior volume of the tank 102 reaches a predetermined pressure level. For instance, at times when the column 114 is sealed from the ambient environment, communication of liquid from the tank 102 to the reservoir 110 may cause pressure to build within the tank 102. If this pressure builds to a sufficient level, it may tend to hold liquid in the tank 102 and thereby impede communication of liquid from the tank 102 to the reservoir 110. Accordingly, the burp valve 118 can be useful in relieving pressure built up within the tank 102 by allowing air to pass between the first interior volume of the tank 102 and the ambient environment.

In the example of FIG. 1A, the humidifier 100a includes a base portion 120a supporting the tank 102. In some embodiments, the base portion 120a can house all, or a portion of, reservoir 110 below the floor 104 of the tank 102. The base portion 120a can similarly house other components useful for operation of the humidifier 100a. In various examples, the base portion 120a can house components such as an atomizer for producing mist from liquid in the reservoir 110, one or more fans, a controller for facilitating various operations of the humidifier 100a, one or more sensors (e.g., a liquid quantity sensor), one or more power supplies for providing electrical power to various humidifier components, and the like. As shown, base portion 120a of the humidifier 100a of FIG. 1A includes one or more vents 124, for example, for facilitating air transfer into the interior of the base portion 120a. In some examples, the base portion can include one or more sensors, such as a temperature sensor and/or a humidity sensor, for sensing conditions of the local environment of the humidifier. In some examples, properties of the air that enter the base portion 120a of the humidifier via the vent 124 can be analyzed using one or more sensors. Additionally or alternatively, vents 124 can facilitate cooling of various components housed within the base portion 120a. In some embodiments, humidifier 100a includes one or more fans positioned within the base portion 120a to further promote air cooling of components within the base portion 120a. Additionally or alternatively, one or more fans within the humidifier 100a can be used to force mist from the atomizer through column 114 and out of the cap 116a and/or 116b.

In the illustrated example, the base portion 120a is removably coupled to the tank 102 by way of a mate ring 122. In some examples, the mate ring is integrally formed into the tank 102 such that when the tank 102 and base portion 120a are joined, the mate ring 122 engages base portion 120a. The mate ring 122 can provide a sealing engagement between the base portion 120a and the tank 102 so that liquid in the tank 102 and/or the base portion 120a (e.g., in reservoir 110) does not escape the humidifier 100a at the interface between the tank 102 and base portion 120a.

The humidifier 100a of FIG. 1A can include an interface 130 and a tank water level sensor 140 positioned on the liquid tank 102. In some embodiments, the interface 130 provides interaction with a user. Such interaction can include receiving an input from a user, such as a mist emission setting, for example, via a touch screen, push-button interface, one or more dials, switches, or the like. In some examples, combinations of such interface can be used. Additionally or alternatively, interface 130 can be used for outputting information to a user, such as an indication of a mist emission setting, for instance, via one or more light indicators, such as light emitting diodes (LEDs) or other light sources.

In various examples, light from the interface 130 can present information to the user, such as a mist emission level from the humidifier. In some such examples, the interface includes a plurality of light emitting elements arranged linearly. The number of light emitting elements that actively emit light can correspond to a level of mist emission. For example, a lowest level of mist emission can correspond to a single light source, for instance, positioned nearest the mate ring 122. As the mist emission increases, the number of active light sources can similarly increase to represent the increasing emission.

As shown, humidifier 100a further comprises the tank water level sensor 140 that can be used to detect the level of water in the liquid tank 102. For instance, in the illustrated examples, tank water level sensor 140 extends along the vertical dimension of sidewall 108 so that the interface between the water and air in the tank 102 at the tank water level sensor 140 is representative of the amount of water in the tank 102. In some embodiments, tank water level sensor 140 comprises a capacitive sensor configured to detect the water level based on changes in capacitance at the tank water level sensor 140. In some such examples, the internal components of the tank water level sensor 140 can be isolated from the external environment surrounding the humidifier 100a so that any stray electric fields or touching of the outer surface of the humidifier 100a does not impact the capacitance of the tank water level sensor 140.

In some embodiments, a controller can be configured to control operation of one or more components, such as the interface 130, tank water level sensor 140, atomizer (not shown), fan (not shown), a reservoir valve and the like. In some such embodiments, the controller can be positioned in the base portion 120a of the humidifier 100a. A controller positioned in the base portion 120a can communicate with various components via wired or wireless communication. In some examples, the controller positioned in the base portion 120a can be arranged to communicate with components in the tank 102 (e.g., the interface 130, the tank liquid level sensor 140, etc.) via a connector that facilitates electrical communication between the base portion 120a and the mate ring 122.

As shown, base portion 120a of the humidifier 100a of FIG. 1A can include one or more vents 124, for example, for facilitating air transfer into the interior of the base portion 120a. In some examples, the base portion can include one or more sensors, such as a temperature sensor and/or a humidity sensor, for sensing conditions of the local environment of the humidifier. In some examples, properties of the air that enter the base portion 120a of the humidifier via the vent 124 can be analyzed using one or more sensors. Additionally or alternatively, vents 124 can facilitate cooling of various components housed within the base portion 120a.

In some embodiments, humidifier 100a includes one or more fans positioned within the base portion 120a to further promote air cooling of components within the base portion 120a, for example, by pulling in ambient air via vents 124. Additionally or alternatively, one or more fans within the humidifier 100a can be used to force mist from the atomizer through column 114 and out of the cap 116a and/or 116b.

In other examples, vents 124 may be excluded. For instance, in some embodiments, air cooling may not be necessary within the base portion 120a. Additionally or alternatively, in some embodiments, one or more sensors for sensing conditions of the ambient environment may be positioned outside of the humidifier and may be in wired or wireless communication with one or more humidifier components. In some such examples, vents (e.g., 124 in FIG. 1A) are not required for sampling ambient air via internal components housed in the base portion (e.g., 120a).

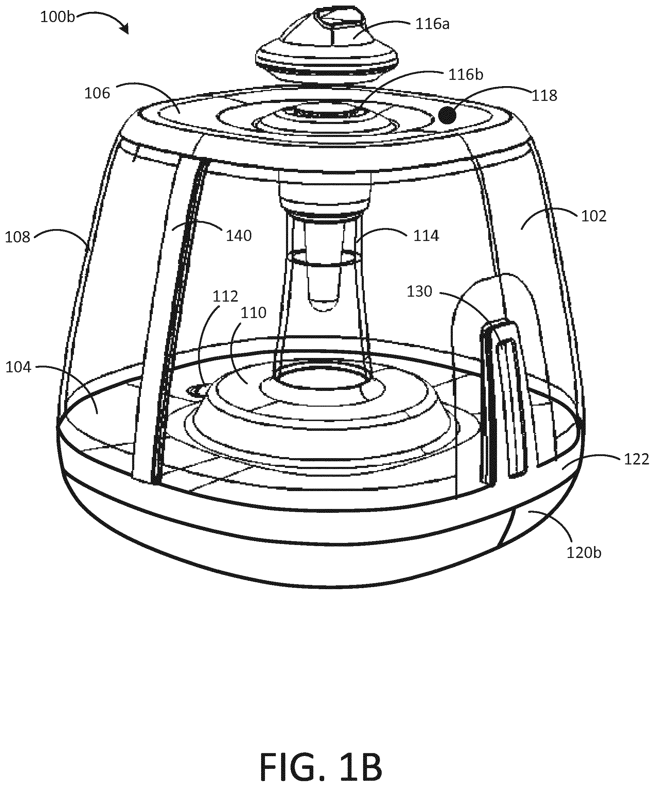

FIG. 1B shows a perspective view of an alternative humidifier without vents in the base portion. As shown, the humidifier 100b of FIG. 1B is similar to the humidifier 100a in FIG. 1A, and may operate generally as described with respect to humidifier 100a in FIG. 1A. However, as shown, base portion 120b of humidifier 100b does not include vents similar to vents 124 shown in base portion 120a in FIG. 1A.

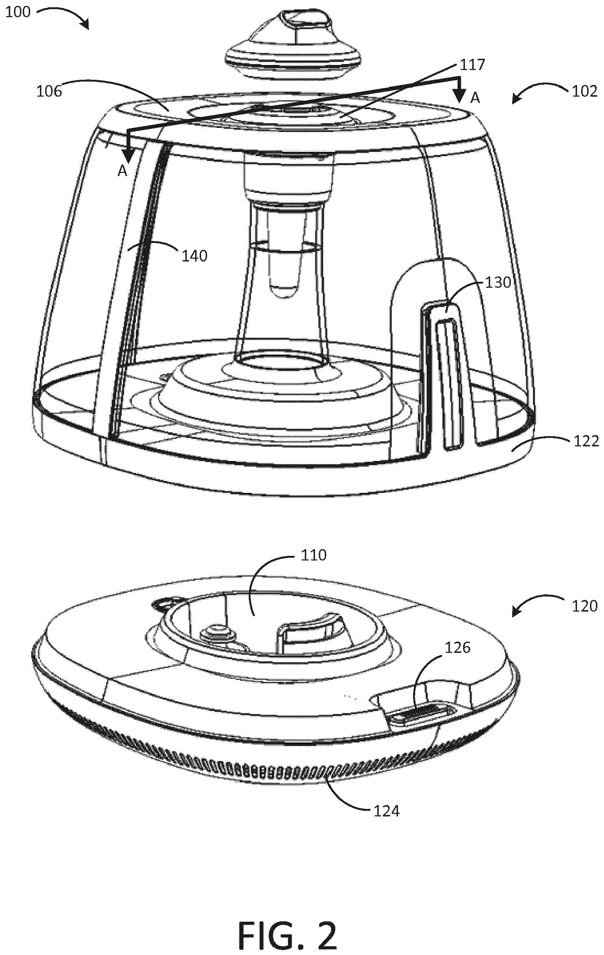

FIG. 2 shows a separated, perspective view of the exemplary humidifier 100 of FIG. 1A in which the liquid tank 102 is removed from the base portion 120. In this embodiment, lid 106, sealing assembly 117, mate ring 122, interface 130, and tank water level sensor 140 are included with the liquid tank 102. As noted above and shown here, the base portion 120 includes a reservoir 110, which can be used for storing water to be atomized during operation of the humidifier 100. As described elsewhere herein, in some examples, the base portion 120 includes components such as a power supply, controller, liquid atomizer, fan, valve, and the like. Some such components can be housed by the base portion 120, for example, enclosed by vent 124 to allow air cooling of such components. The reservoir 110 can be sealed from other portions of the base portion 120 so that fluid does not escape the reservoir 110 and interact with components such as a controller and/or a power supply.

In the example of FIG. 2, the base portion 120 includes a lower connector 126. In some examples, lower connector 126 is configured to mate with a corresponding connector on the mate ring 122. In some such examples, lower connector 126 can be in communication with various components housed in the base portion 120 such that, when connected with a corresponding connector (e.g., on the liquid tank), it can facilitate communication between such components and the mate ring 122. Mate ring 122 can be in communication with, for instance, the interface 130 and/or the tank water level sensor 140. Thus, in some examples, lower connector 126 can facilitate communication between components in the base portion 120 (e.g., a controller and/or a power supply) and the tank water level sensor 140 and/or the interface 130.

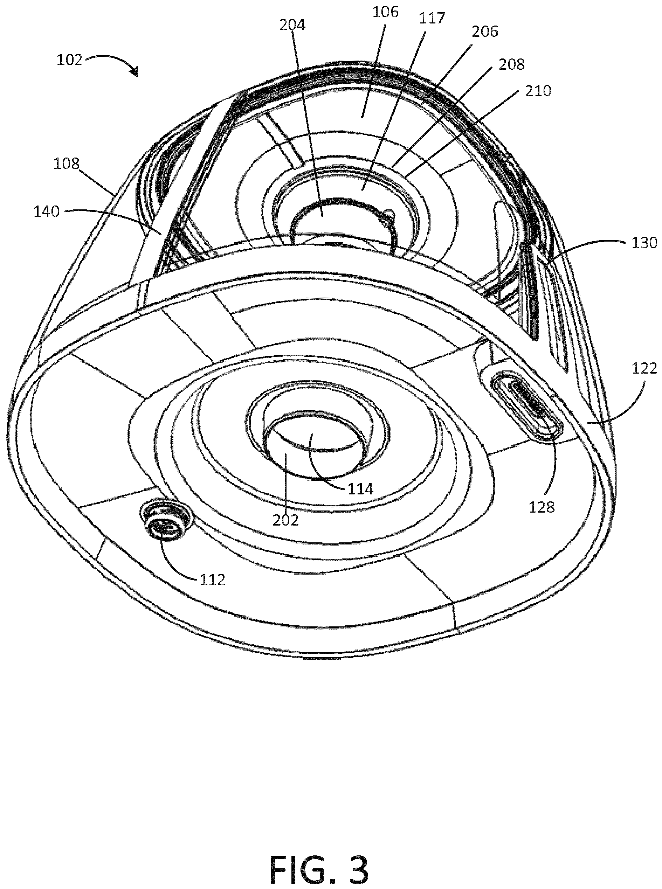

FIG. 3 shows a perspective view of an underside of the exemplary liquid tank 102. As described elsewhere herein, the tank 102 of FIG. 3 includes mate ring 122, interface 130, and tank water level sensor 140. The tank 102 also includes the lid 106, the sealing assembly 117, and the column 114 through which mist can be emitted (e.g., from the base portion) into the ambient environment.

The column 114 can extend within the interior volume of the tank 102. A first end 202 of the column 114 can be in fluid communication with the reservoir at the base portion, and a second end 204 of the column 114 can be coupled to the sealing assembly 117.

As noted elsewhere herein, the lid 106 can be removable from the tank 102. When present, as shown here, the lid 106 can be selectively sealed to the column 114 and to the tank 102. In certain embodiments, this can keep the interior volume of the tank 102 sealed from the ambient atmosphere. The lid 106 can include an outer perimeter 206 and an inner perimeter 208. In the illustrated embodiment, the outer perimeter 206 of the lid 106 can be selectively sealed to the tank 102, such as at the sidewall 108 of the tank 102. The inner perimeter 208 can define an opening 210 in the lid 106. The lid 106 can be selectively sealed to the column 114 at the opening 210 via the sealing assembly 117. As shown here, the lid 106 is selectively sealed to the column 114 at the second end 204 of the column 114. The opening 210 in the lid 106 can define an area that is less than an area of the lid 106 defined between the outer perimeter 206 and the inner perimeter 208. When the lid 106 is removed, such dimensions may be useful in providing access to the interior volume of the tank 102.

Further shown in FIG. 3 is the selective sealing component 112. As noted, the selective sealing component 112 can facilitate communication of water from the tank 102 to other portions of the humidifier (e.g., into the reservoir of the base portion). The selective sealing component 112 can be actuated between opened and closed positions to allow water to be, and prevent water from being, respectively, communicated from the tank 102. For instance, the selective sealing component 112 may mate with a corresponding member of another portion of the humidifier (e.g., the base portion) to cause the selective sealing component 112 to actuate from the closed position to the opened position. As one example, the selective sealing component 112 may be a spring loaded valve that is biased to the closed position and moved to the opened position upon mating with a corresponding member. Likewise, this biasing configuration can force the selective sealing component 112 to the closed position when the tank 102 is moved from the mating position with the corresponding member. The selective sealing component 112 can be useful, for instance, in allowing water to be communicated from the tank 102 during humidifier operation yet preventing water from leaking out of the tank 102 when the tank 102 is removed from the humidifier (e.g., to refill the first interior volume of the tank 102, to clean the first interior volume of the tank 102, etc.).

The liquid tank 102 of FIG. 3 further includes an upper connector 128. In some examples, the upper connector 128 is configured to mate with another connector (e.g., lower connector 126 of FIG. 2) to facilitate communication between various components. In some embodiments, the mate ring 122 includes communication channels configured to provide electrical communication between the upper connector 128 and other system components, such as the interface 130 and/or the liquid level sensor 140. In some such examples, communication channels comprise electrically conductive channels, such as wires disposed in the mate ring 122.

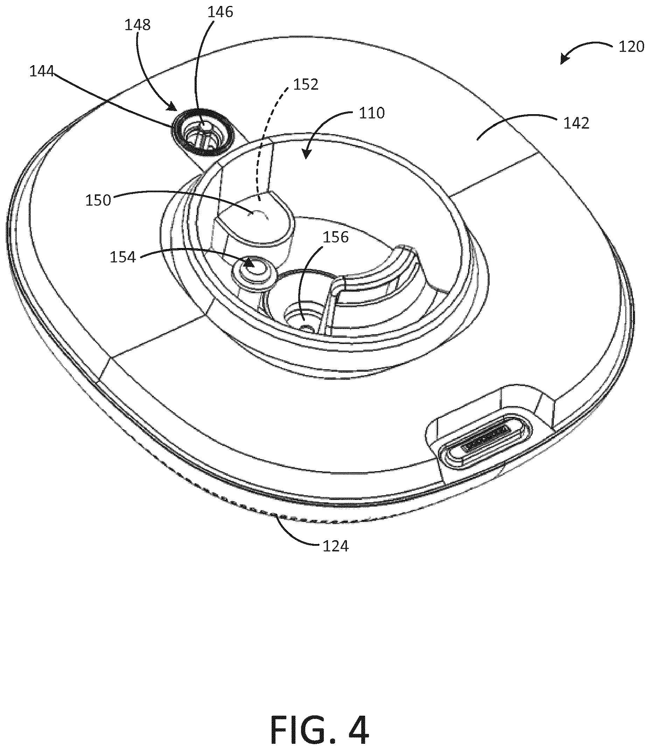

FIG. 4 shows a perspective view of the base portion 120 of the exemplary humidifier. As noted elsewhere herein, the base portion 120 can include the reservoir 110. The reservoir 110 can be configured to hold water for being atomized. In the illustrated embodiment, the base portion 120 is shown as including a housing, generally shown at 142. In some embodiments, the housing 142 at least partially defines the boundary of the reservoir 110 and prevents water from escaping into other portions of the base portion 120. For instance, the reservoir 110 can be formed by the housing 142, of the base portion 120, and the floor of the tank. In some such examples, the housing 142 can further enclose additional components, such as a controller and/or a power supply (not shown). In some examples, the housing 142 includes vent 124 to allow air to flow into an area defined by the housing 142.

As shown in FIG. 4, the base portion 120 can include a port 144 and an actuation member 146. The port 144 can be defined in the housing 142. The actuation member 146 can be located at or near the port 144. For instance, as shown in the illustrated embodiment, the actuation member 146 may extend out from the housing 142 of the port 144. As one example, the actuation member 146 may have an end extending out to a greater elevation than the housing 142. This end of the actuation member 146 may have a geometry that is complementary to the selective sealing component of the tank described elsewhere herein.

Together, the port 144 and actuation member 146 can define a tank interface assembly 148 of the base portion 120. The tank interface assembly 148 can facilitate fluid communication between the tank and the base portion 120, and, in particular, the reservoir 110 thereof. The tank interface assembly 148 can be positioned in the base portion 120 at a location that is aligned with a location of the selective sealing component of the tank when the tank is coupled to the base portion 120. Upon coupling the tank to the base portion 120, the actuation member 146 can be configured to mate with the selective sealing component of the liquid tank and, thereby, actuate the selective sealing component to the opened position. This can allow liquid from the tank to be communicated to the reservoir 110 of the base portion 120. Thus, at times when the tank is coupled to the base portion 120 the selective sealing component of the tank can be in the opened position. On the other hand, when the tank is uncoupled from the base portion 120, the actuation member 146 is removed from the selective sealing component, and the selective sealing component is brought to the closed position.

To actively control communication of liquid from the tank to the reservoir when the tank is coupled to the base portion 120, the base portion 120 can include a valve 150. The valve 150 may facilitate the selective addition of liquid to the reservoir 110 from the tank. To do so, the valve 150 can be configured to actuate between a closed position and an opened position. The closed position of the valve 150 can prevent liquid from being communicated between the first interior volume of the tank and the reservoir 110. The opened position of the valve 150 can allow liquid to be communicated between the first interior volume of the tank and the reservoir 110. The humidifier's controller, for instance, can be coupled to the valve 150 and configured to cause selective actuation of the valve 150 between the closed and opened positions.

Also shown in the example of FIG. 4, the humidifier can include a holding chamber 152. The holding chamber 152 can define a second interior volume therein. As shown here, the holding chamber 152 is located in the base portion 120. The holding chamber 152 can be in fluid communication with the reservoir 110 at a first location and with the first interior volume of the tank at a second location. In the illustrated embodiment, the holding chamber 152 is in fluid communication with the reservoir 110 at the first location via the valve 150. And, in the illustrated embodiment, the holding chamber 152 is in fluid communication with the first interior volume of the tank at the second location via the tank interface assembly 148, in particular via the port 144. When the tank is coupled to the base portion 120, liquid can flow through the port 144 and into (e.g. fill) the second interior volume of the holding chamber 152.This liquid can be held in the holding chamber 152 if the valve 150 is in the closed position. When the valve 150 is selectively actuated (e.g., by the controller) to the opened position, liquid held in the holding chamber 152 can be communicated into the reservoir 110. Thus, in this exemplary embodiment, liquid is communicated from the tank to the holding chamber 152 (e.g., when the tank is coupled to the base portion 120) and from the holding chamber 152 to the reservoir 110 (e.g., when the valve is actuated to the opened position). In another embodiment, there need not be a holding chamber 152, and thus liquid is communicated directly into the reservoir 110 from the tank interface assembly 148.

FIG. 4 further illustrates that the reservoir 110 can include a liquid quantity sensor 154. The liquid quantity sensor 154 can monitor a quantity of liquid (e.g., water) within the reservoir 110. The liquid quantity sensor 154 can be coupled to the humidifier's controller so as to provide data signals to the controller corresponding to the liquid quantity in the reservoir 110. The controller can use signals from the liquid quantity sensor 154 to take actions in relation to other components of the humidifier. For instance, signals from the liquid quantity sensor 154 can be used by the controller to actuate the valve 150 in order to add liquid to the reservoir 110.

In addition, FIG. 4 shows a liquid atomizer 156 of the base portion 120. The liquid atomizer is shown positioned here in the reservoir 110. The liquid atomizer 156 can be used to atomize (e.g., vaporize) liquid within the reservoir 110 for emission of mist into the ambient environment. As one example, the liquid atomizer 156 can include an ultrasonic agitator. The ultrasonic agitator can include a transducer element, such as a piezoelectric transducer, to create an ultrasonic frequency oscillation in the adjacent liquid in the reservoir 110. This action can cause such liquid to be atomized and act to generate a mist.

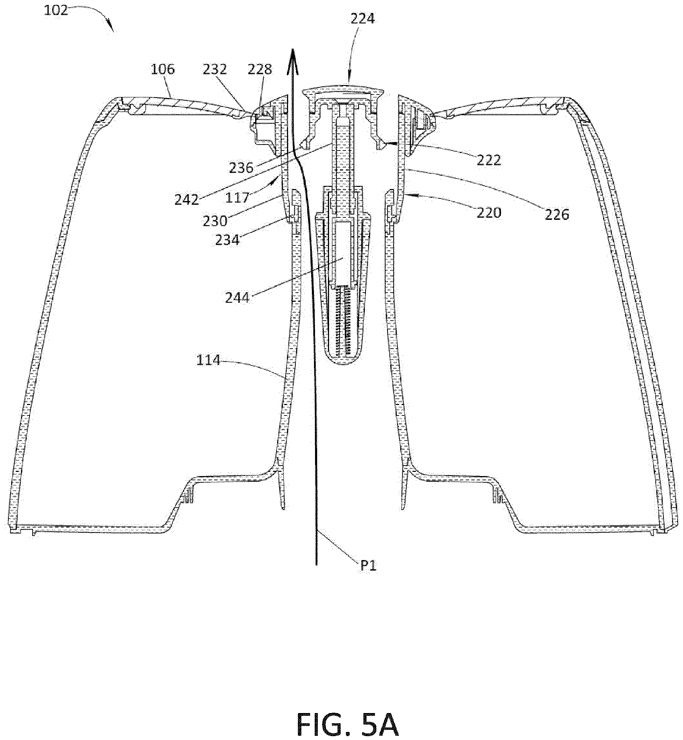

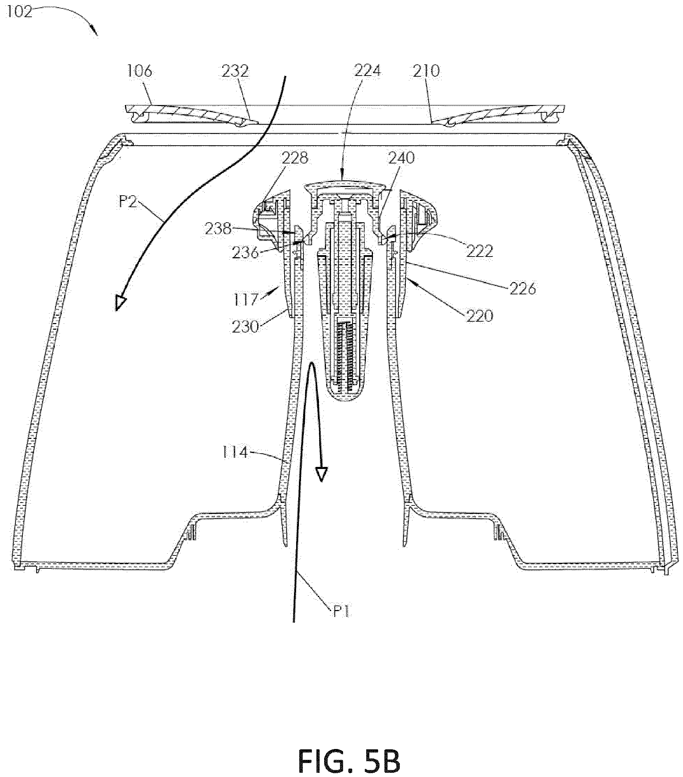

FIGS. 5A and 5B illustrate cross-sectional views of the exemplary liquid tank 102 of FIG. 2 taken along line A-A in FIG. 2. As described elsewhere herein, the sealing assembly 117 can be actuated between two or more positions. FIG. 5A shows the sealing assembly 117 in one exemplary position, while FIG. 5B shows the sealing assembly 117 in another exemplary position.

The sealing assembly 117 can include a first seal member 220, a second seal member 222, and a movable member 224. The movable member 224 can carry the first seal member 220 and the second seal member 222 (e.g., the first seal member 220 and second seal member 222 are coupled to the movable member 224). The sealing assembly 117 can be actuated from one position to another, in this example, by moving the movable member 224. This can result, for instance, from a user pushing on the movable member 224. Though in other examples various other mechanisms can be used to supply mechanical force needed to move the movable member 224. In the illustrated embodiment, the column 114 is fixed in place at the tank 102, and the movable member 224 is moved (e.g., upward/downward) relative to the column 114. As the movable member 224 is moved relative to the column 114, the first seal member 220 and the second seal member 222 can each likewise move relative to the column 114. Thus, moving the movable member 224 can appropriately position the first seal member 220 and the second seal member 222. Certain positions of the first seal member 220 and the second seal member 222 can form one or more seals and/or unseal one or more fluid pathways.

The sealing assembly 117 can be in one position as shown in FIG. 5A. In this position, the sealing assembly 117 can seal the lid 106 to the column 114. Also, in some embodiments, in this position, the sealing assembly 117 can seal the column 114 from the interior volume of the tank 102. Here, the movable member 224 is in a first position.

At the first position of the movable member 224, shown in FIG. 5A, the movable member 224 can position the first seal member 220 to seal the lid 106 to the column 114. Also, in this embodiment, in the first position, the movable member 224 can position the first seal member 220 to seal the column 114 from the interior volume of the tank 102. Thus, in the first position of the movable member 224, the first seal member 220 can be configured to seal the lid 106 to the column 114 and seal the column 114 from the interior volume of the tank 102.

To create these seals in the first position of the movable member 224, the first seal member 220 can include two seal interfaces spaced apart along a first support surface 226. To seal the lid 106 to the column 114, the first seal member 220 can include a lid seal interface 228. In one example, the lid 106 can include a lid inner seal ring 232 (e.g., an appropriate gasket, such as an O-ring) and the lid seal interface 228 can include a surface adapted to releasably engage the lid inner seal ring 232. The lid inner seal ring 232 can be secured at the inner perimeter of the lid 106 and is shown here as having a tapered end surface releasably received by the surface of the lid seal interface 228. To seal the column 114 from the interior volume of the tank 102, the first seal member 220 can include a first column seal interface 230. In one example, the column 114 can include a column outer seal ring 234 (e.g., an appropriate gasket, such as an O-ring) and the first column seal interface 230 can include a surface adapted to releasably engage the column outer seal ring 234. The column outer seal ring 234 can be secured around an outer surface of the column 114. As shown here, the surface of the first column seal interface 230 adapted to releasbly engage the column outer seal ring 234 can include a tapered edge curved in a direction toward the column outer seal ring 234.

In addition, in the first position of the movable member 224 shown in FIG. 5A, the movable member 224 can position the second seal member 222 to allow for fluid communication between the column 114 and the ambient atmosphere. Thus, in the first position of the movable member 224, the second seal member 222 can be positioned such that fluid pathway P1 provides fluid communication between the reservoir of the humidifier and the ambient atmosphere through the column 114. This can allow mist generated in the reservoir to be delivered through the column 114 to the ambient atmosphere. At the same time, the first seal member 220 can seal the column 114 from the interior volume of the tank 102 to prevent this mist passing through the column 114 from escaping into the interior volume of the tank 102.

The sealing assembly 117 can be in another position as shown in FIG. 5B. In this position, the sealing assembly 117 can seal the column 114 from the ambient atmosphere to prevent delivery of mist to the ambient atmosphere. Also, in some embodiments, in this position the sealing assembly 107 can unseal the lid 106 from the column 114. Here, the movable member 224 is in a second position. The sealing assembly 117 can be actuated to the position shown in FIG. 5B by moving the movable member 224 to the second position. In embodiments the movable member 224 is configured to move up and down relative to the columns 114. In such embodiments, the second position of the movable member 224 may be referred to as a "down" position (whereas, in such embodiments, the first position of the movable member 224 may be referred to as an "up" position). Accordingly, in one example, the movable member 224 can be actuated from the first position shown in FIG. 5A to the second position shown in FIG. 5B by moving the movable member 224 in a downward direction.

At the second position of the movable member 224 shown in FIG. 5B, the movable member 224 can position the second seal member 222 to seal the column 114, and thereby the reservoir, from the ambient atmosphere. Thus, in the second position of the movable member 224, the second seal member 222 can be configured to seal the column 114 from the ambient atmosphere.

To seal the column 114 from the ambient atmosphere, the second seal member 222 can include a second column seal interface 236. In one example, the second column seal interface 236 can include an inner seal ring (e.g., an appropriate gasket, such as an O-ring) adapted to engage a wall 238, such as a wall 238 of the column 114. As shown here, the inner seal ring of the second column seal interface 236 can be secured to a second support surface 240 at a location thereon to engage the wall 238.

As shown in FIG. 5B, in the second position of the movable member 224, the second seal member 222 can be positioned such that fluid pathway P1 is sealed. As such, the second position of the movable member 224 positions the second seal member 222 to prevent fluid communication between the reservoir of the humidifier and the ambient atmosphere through the column 114. This can prevent mist from being delivered to the ambient atmosphere.

In addition, in the second position of the movable member 224 shown in FIG. 5B, the movable member 224 can position the first seal member 220 to disengage the lid 106 and thereby unseal the lid 106 from the column 114. This can allow the lid 106 to be removed from the tank 102, for instance to clean or refill the interior volume of the tank 102. Thus, in the second position of the movable member 224 the first seal member 220 can be positioned such that fluid pathway P2 provides fluid communication between the ambient atmosphere and the interior volume of the tank 102. At the same time, the second seal member 222 can seal the column 114 from the ambient atmosphere which may be useful, for instance, in preventing water from being refilled into the tank 102 from passing into the column 114. The second seal member 222, by sealing the column 114 as described, also seals the column 114 from the interior volume of the tank 102.

The lid 106 can be made of a variety of one or more suitable materials. In one example, the lid 106 is made, at least in part, of a flexible polymer material. In such example, the lid 106 can be pliable in a manner that may be useful for engaging and disengaging with the sealing assembly 117 as well as the liquid tank 102.

To facilitate movement between the first and second positions, the movable member 224 can be made up of a variety of actuation mechanisms in different embodiments. In the embodiment illustrated in FIGS. 5A and 5B, the movable member 224 includes a shaft 242 that is biased by a spring 244 to the first position shown in FIG. 5A. To actuate the movable member 224 to the second position, in this example, the bias of the spring 244 is overcome as downward force is applied to the shaft 242. In one further example, the shaft 242 may rotate about its longitudinal axis as it is being forced downward. This rotation may bring a shaft engagement structure on the shaft 242 into an appropriate position for alignment with a corresponding capture structure on the sealing assembly 117. When the shaft engagement structure is brought into alignment (e.g., radially by rotation of the shaft 242 and longitudinally by downward movement of the shaft 242) with the corresponding capture structure, engagement between these two structures can hold the movable member in the second position. Then, subsequent actuation of the sealing assembly 117, such as by a relatively smaller, additional downward movement of the shaft 242 can disengage these structures and allow the bias force of the spring 244 to bring the movable member back to the first position.

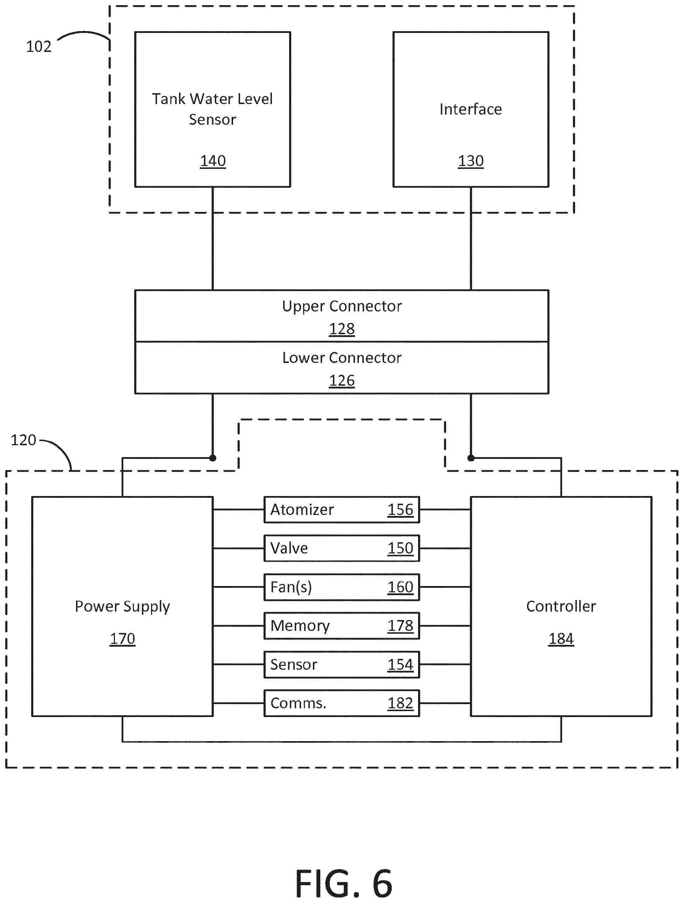

FIG. 6 is a schematic diagram showing exemplary communication between various system components within the humidifier. In the illustrated embodiment, the liquid tank 102 includes the tank water level sensor 140 and the interface 130. The example of FIG. 6 further includes the base portion 120 including a power supply 170 and a controller 184. As described elsewhere herein, such components can be housed in the base portion 120 of the humidifier and, for instance, be supported by a circuit board therein.

The base portion 120 further includes additional humidifier components, such as the liquid atomizer 156, the valve 150, one or more fans 160, a memory 178, liquid quantity sensor 154 and one or more other sensors (e.g., a temperature sensor, humidity sensor, etc.), and a communication interface 182. Such components may be used during various operations of the humidifier. For instance, in some exemplary embodiments, atomizer 156 and one or more fans 160 can operate together to create mist from liquid stored in a reservoir and subsequently expel the mist from the humidifier. This could include one or more fans 160 in fluid communication with the fluid column to deliver mist created by the atomizer 156 through the fluid column to the ambient atmosphere. Memory 178 can be used to store operating instructions for the controller 184 and/or data collected during various humidifier operations. Additionally or alternatively, controller 184 can receive data from the liquid quantity sensor 154 and one or more sensor(s), when present, and/or the fan(s) 160. In various examples, components such as memory 178 may be integrated into controller 184 or may be stand-alone components (e.g., on a circuit board).

According to the exemplary configuration of FIG. 6, the controller 184 is in communication with the atomizer 156, valve 150, fan(s) 160 (e.g., a centrifugal fan), memory 178, sensor(s) 154, communication interface 182, and lower connector 126. The lower connector 126 can facilitate communication with the tank water level sensor 140 and/or the interface 130 by way of the upper connector 128. While shown as being in communication with the tank water level sensor 140 and the interface 130 via the lower connector 126 and upper connector 128, in some examples, the controller 184 can communicate with one or both of the tank water level sensor 140 and the interface 130 directly, for example, via a wireless communication (e.g., Bluetooth communication).

In various embodiments, controller 184 can include any component or combination of components capable of receiving data (e.g., a user-selected mist emission setting via the user interface, tank water level data via the water level detector, reservoir water quantity data from liquid quantity sensor 154, fan speed related data from the fan(s) 160, etc.) from one or more system components. The controller 184 can be further configured to analyze the received data, and perform one or more actions based on the analyzed data. In various examples, controller 184 can be embodied as one or more processors operating according to instructions included in a memory (e.g., memory 178), such as a non-transitory computer-readable medium. Such memory can be integral with the controller 184 or separate therefrom. In other examples, such a controller 184 can be embodied as one or more microcontrollers, circuitry arranged to perform prescribed tasks, such as an application-specific integrated circuit (ASIC), or the like.

In some embodiments, the controller 184 can be configured to communicate with other humidifier components in any of a variety of ways, such as via wired or wireless communication (e.g., via lower connector 126 and upper connector 128). In some examples, the controller 184 can communicate with one or more components via an I2C connection, a Bluetooth® connection, or other known communication types. In various embodiments, controller 184 can be embodied as a plurality of controllers separately in communication with different system components. Such controllers can be programmed to operate in concert (e.g., according to instructions stored in a single memory or communicating memories), or can operate independently of one another.

For example, in various embodiments, the controller 184 can be in one- or two-way communication with various components of the humidifier, such as the atomizer 156, the valve 150, the fan(s) 160, the liquid quantity sensor 154, the interface 130, and/or the tank water level sensor 140. For example, the controller 184 can be configured to receive data from the fan(s) 160 and control operation of the valve 150 and/or the atomizer 156 in conjunction with control of the fan(s) 160. It will be appreciated that various examples are possible, some of which are described herein by way of example.

As a further example, in some embodiments, the controller 184 can be configured to receive signals from the fan(s) 160 and control operation of the fan(s) 160 based on these received signals. This could include the controller 184 being configured to use one or more signals from the fan(s) 160 to measure a speed at which the fan is operating and causing a supply of power (e.g., from the power supply 170) to the fan(s) 160 to be changed based on this measured speed of the fan(s) 160. For example, the controller 184 can receive a signal from the fan(s) 160 and measure fan speed at a first time and a second, later time. The controller 184 can compare the fan speed at the first time with the fan speed at the second time. When a difference between fan speed at the first time and the second time exceeds a predetermined amount, the controller 184 can be configured to change an amount of power supplied to the fan(s) 160. For instance, when the sealing assembly of the humidifier is actuated to a certain position it may seal the fluid column, and thus the reservoir, from the ambient atmosphere as described elsewhere herein. This can cause the speed of the fan(s) 160 to increase. The controller 184 can detect this relative increase in speed of the fan(s) 160 (e.g., the second time being when the sealing assembly seals the column from the ambient atmosphere) and cause an amount of power supplied to the fan(s) 160 to be reduced (e.g., terminated). This may be useful in safeguarding the fan(s) 160. It may also provide a humidifier that need not necessarily be actively turned off by a user prior to refilling the tank. This can be the case since the humidifier may be capable of detecting a refilling operational state based on actuation of the sealing assembly to release the lid from the tank, which can also act to seal fluid column and cause the fan speed to increase.

Using signals from the fan(s) 160 to measure a speed at which the fan(s) 160 is operating may be useful for other purposes as well. For instance, the controller may be able to use the fan speed to determine which type of cap is present at the end of the column. As one example, the controller may receive input that the humidifier is to operate in a particular mode. Based on this mode input, the controller can compare measured fan speed to one or more predetermined fan speed thresholds associated with the input mode. If the measured fan speed differs more than a predetermined amount from the one or more predetermined fan speed thresholds associated with the input mode, the controller may determine that an incorrect type of cap is attached at the column. As a specific example, where a humidifier operational mode is input at the controller that is associated with the directional cap and the measured fan speed differs more than a predetermined amount from a predetermined fan speed threshold(s) associated with the input operational mode, then the controller may determine that the domed cap is incorrectly being used.

The controller 184 can adjust operation of one or more humidifier components to adjust the humidifier output according to received input. In some examples, the controller 184 can adjust the operation (e.g., the operating power, operating frequency) of the atomizer 156 in order to produce more or less mist and/or vary the degree of atomization of the water. Additionally or alternatively, the controller 184 can adjust the operating speed of a fan 160 (e.g., a mist fan, such as a centrifugal fan) to control the speed at which mist is expelled from the humidifier. In certain examples, the controller 184 may selectively adjust one or both of the atomizer 156 and the fan 160 depending on the magnitude of output level change and/or desired output level. In further examples, as described elsewhere herein, the controller 184 can receive data from one or more components, such as fan(s) 160, and/or sensors, such as liquid quantity sensor 154 in the base portion 120 and/or external sensors in communication with controller 184. In some such examples, the controller 184 can be configured to receive data from such sensors and adjust humidifier operation accordingly. For instance, in an exemplary embodiment, the controller 184 monitors the water level in the reservoir according to data received from the liquid quantity sensor 154 and can act to adjust the water level in the reservoir via actuation of the valve 150. As another example, the controller 184 monitors the speed of the fan(s) 160 according to data received from the fan(s) 160 and can act to adjust the power being supplied to the fan(s) 160.

In some embodiments, the communication interface 182 can facilitate communication between one or more humidifier components (e.g., controller 184) and one or more external components via a wired connection and/or a wireless connection, such one or more of a Wi-Fi® connection, a Bluetooth® connection, or the like. In some such embodiments, the controller 184 can be accessed via the communication interface 182 such that a user can adjust one or more settings of the controller 184 via an external or remote device. Similarly, such access to the controller 184 can be used to control operation of the humidifier, such as a desired amount of mist emission or the like, in addition to or instead of other interfaces (e.g., interface 130). In some such examples, a user can interface with the communication interface 182 of the humidifier via, for example, a web (e.g., cloud-based) interface and/or an application running on the user's mobile device, such as a smartphone, tablet, or the like, for example, as described in US Pat. App. No. 15/665,616, titled "Humidifier User Interaction.

In some embodiments, the controller 184 can additionally or alternatively be in communication with one or more external devices, for example, via communication interface 182. In some such examples, the controller 184 can receive data from one or more sensors external to or built-in to the humidifier, for example, via wired or wireless connection, such as Ethernet, Bluetooth®, Wi-Fi®, etc. Some such sensors can be used for measuring different aspects of the ambient environment of the humidifier, such as a temperature sensor, humidity sensor (e.g., a hygrometer), or the like. In some such examples, the controller 184 can perform one or more operations according to received data from external sensors. In some embodiments, remotely located components such as a humidity sensor, temperature sensor, or the like can be used to measure various parameters regarding the ambient environment surrounding the humidifier. In some such examples, there is no need to sample surrounding air in the humidifier itself, and the humidifier base portion can be made without vents (e.g., base portion 120b in FIG. 1B), which reduces the likelihood of excess liquid from undesirably entering the base portion of the humidifier.

In the illustrated example, power supply 170 is in communication with a variety of components in the base portion 120 as well as lower connector 126, which itself is in communication with the upper connector 128. Thus, in various embodiments, the power supply 170 can provide electrical power to various components in the base portion 120, such as the atomizer 156, valve 150, fan(s) 160, sensor 154, communication interface 182, controller 184, as well as any other components. Further, power supply 170 can provide electrical power to components proximate the liquid tank 102, such as the tank water level sensor 140 and the interface 130, by way of the upper connector 128 and lower connector 126.

In various embodiments, power supply 170 can include one or more sources of electrical power, such as one or more batteries, capacitive energy storage devices, or the like. Additionally or alternatively, power supply 170 can include a wired power supply, for example, a plug capable of plugging into an outlet. In some embodiments, the power supply 170 receives electrical power from a power source (e.g., a wall outlet) and outputs an appropriate electrical power to various humidifier components as needed during operation of the humidifier. As noted, in some cases an amount of electrical power output to certain humidifier components (e.g., the fan(s) 160) can be regulated by the controller 184. In some examples, each component in the humidifier can operate at approximately the same voltage output from power supply 170. In still further examples, power supply 170 can include a plurality of power-supplying components for providing different amounts of electrical power to different components. For instance, in some embodiments, power supply 170 can include a power board having a plurality of outputs for providing power to various system components. In some embodiments, power supplied to various components within the humidifier are independent from one another so that any short circuit condition (e.g., due to water ingress) in the power supplied to one portion of the humidifier does not impact the power supplied elsewhere.

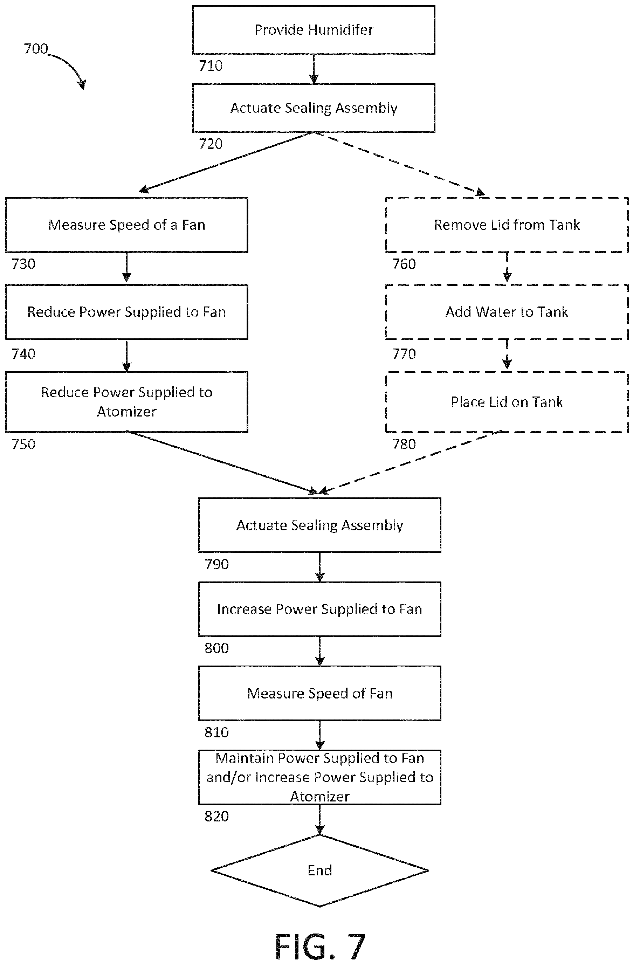

FIG. 7 is a flow diagram showing an exemplary embodiment of a process 700 associated with a humidifier (e.g., a process of operating the humidifier). At step 710, the process 700 includes providing a humidifier. In one embodiment, a humidifier device can be provided that has one or more of the features described herein and could be the same as, or similar to, any of the humidifier embodiments described herein. For instance, the provided humidifier at step 710 can include a humidifier embodiment that has a base, a fluid column, a fluid tank, and a sealing assembly. The base can be configured to generate mist and can have a liquid reservoir, a fan, and/or an atomizer. The fluid column can be in fluid communication with the liquid reservoir so as to deliver mist to an ambient atmosphere. The sealing assembly can be coupled to the fluid column. The sealing assembly can be actuated from between two or more positions.

At step 720, the process 700 includes actuating the sealing assembly to a position that seals the liquid reservoir from the ambient atmosphere. In one embodiment, actuating the sealing assembly to the position that seals the liquid reservoir from the ambient atmosphere can include moving a movable member of the sealing assembly from one position to another. For instance, the movable member could include a first seal member and a second seal member (e.g., spaced apart from the first seal member) thereon. Moving the movable member from one position to another can include moving the second seal member from one position that allows for fluid communication between the column and the ambient atmosphere to another, different position where the second seal member is configured to seal the column from the ambient atmosphere. In addition, moving the movable member from one position to another can include moving the first seal member from one position where the first seal member is configured to seal a removable lid of the humidifier to the tank to another, different position where the first seal member unseals the lid from the tank. As one example, the sealing assembly may be actuated to the position that seals the liquid reservoir from the ambient atmosphere when a user pushes the movable member, for instance when the user wants to release the lid and refill the tank with water.

At step 730, the process 700 includes measuring a speed of the fan. In one embodiment, measuring the speed of the fan can include measuring the speed of the fan at a first time and a second, different time. For instance, the first time could be prior to actuation of the sealing assembly in step 720 while the second time could be after actuation of the sealing assembly in step 720. In this case, the first time could be when the sealing assembly is in a position that permits fluid communication from the reservoir via the column to the ambient atmosphere and the second time could be when the sealing assembly is in the position that seals the liquid reservoir from the ambient atmosphere. Thus, at the second time mist generated can be sealed within the humidifier and blocked from leaving out though the column. This can cause the fan speed to increase. Accordingly, in such an example, the fan speed at the second time could be different than (e.g., greater than) the fan speed at the first time.

To measure the fan speed, the humidifier can include a controller in signal communication with the fan. As such, the controller can receive signals from the fan that the controller can use to determine a speed of the fan. The controller can receive such signals from the fan continuously or at predetermined sampling intervals and may store in associated memory prior fan speed measurements for later recall and comparison processing.

At step 740, the process 700 includes reducing an amount of power supplied to the fan based on the measured speed of the fan in step 730. In one embodiment, the amount of power supplied to the fan can be reduced based on a relative amount of change in fan speed over a period of time. This can include reducing the amount of power supplied to the fan based on a comparison of the fan speed at the first time and the second, later time. For instance, the amount of power supplied to the fan can be reduced (e.g., lowered but still running the fun, terminated, etc.) when a difference between the fan speed at the first time and the second time exceeds a predetermined amount. As explained elsewhere herein, when the sealing assembly is actuated to a certain position this can cause the fan speed to increase from the first time, when the reservoir is in fluid communication with the ambient atmosphere via the column, to the second time, when the reservoir is sealed from the ambient environment at the column. In one example, at step 740 power supplied to the fan can be reduced upon detecting the relative increase in fan speed from the first time to the second time.

The controller of the humidifier can be in communication with the fan as well as a power supply of the humidifier. As such, the controller can compare determined fan speeds at respective times and, based on this comparison, act to reduce an amount of power supplied to the fan by the power supply of the humidifier.

At step 750, the process 700 includes reducing (e.g., terminating) an amount of power supplied to an atomizer of the humidifier device based on the measured fan speed. For example, similar to reducing the amount of power supplied to the fan, the amount of power supplied to the atomizer can be reduced based on a relative amount of change in fan speed over a period of time. This can include reducing the amount of power supplied to the atomizer based on a comparison of the fan speed at the first time and the second, later time. For instance, reducing the amount of power supplied to the atomizer can include decreasing the amount of (e.g., terminating) power supplied to the atomizer when a difference between the fan speed at the first time and the second time exceeds a predetermined amount. This predetermined amount of change in fan speed used for reducing the amount of power supplied to the atomizer may be equal to that used for reducing the amount of power supplied to the fan. When this is the case, the amount of power supplied to both the fan and the atomizer can be reduced at generally a same time, for instance when the sealing assembly is actuated to a certain position that seals the liquid reservoir from the ambient atmosphere.

In certain embodiments, the process 700 may include steps 760, 770, and 780. At step 760, an embodiment of the process 700 includes removing a lid from the liquid tank. In one instance, the lid can be removed from the liquid tank after the sealing assembly is actuated at step 720. For example, actuating the sealing assembly at step 720 can include moving the movable member from one position to another. This may include moving the first seal member to a position where the first seal member unseals the lid from the liquid tank. In this way, the lid can be removed from the liquid tank at step 760 after the lid has been unsealed from the tank by actuating the sealing assembly. This may happen while the reservoir is sealed from the ambient environment at the column.

At step 770, the embodiment of the process 700 includes adding water to the liquid tank. Water can be added to the liquid tank after the lid has been removed from the liquid tank. In addition, water may be added to the liquid tank while the reservoir is sealed from the ambient environment at the column. It may be useful to add water in order to replenish the supply of water held in the liquid tank and used to generate mist output during humidifier operation. Adding water when the lid is removed from the liquid tank can make replenishing the liquid tank more convenient.

In one case, in addition to or an as alternative to adding water to the liquid tank at step 770 the interior volume of the liquid tank may be cleaned. The interior volume of the liquid tank may be cleaned after the lid has been removed from the liquid tank. In addition, the interior volume of the liquid tank may be cleaned while the reservoir is sealed from the ambient environment at the column. Cleaning the liquid tank when the lid is removed from the liquid tank can make cleaning the interior of the liquid tank more accessible.

At step 780, the embodiment of the process 700 includes placing the lid back on the liquid tank. The lid can be placed back on the liquid tank, for instance, after sufficient water has been added to the liquid tank and/or cleaning of the interior volume of the liquid tank has been completed.

At step 790, the process 700 includes further actuating the sealing assembly from the position that seals the liquid reservoir from the ambient atmosphere, in step 720, to a position that unseals the liquid reservoir from the ambient environment. At this position mist generated by the humidifier can be allowed pass through the column to the ambient atmosphere. In one embodiment, actuating the sealing assembly to the position that unseals the liquid reservoir from the ambient atmosphere can include moving the second seal member of the movable member from one position where the second seal member is configured to seal the column from the ambient atmosphere to another position where the second seal member allows for fluid communication between the column and the ambient atmosphere. In addition, moving the movable member at step 790 can include moving the first seal member of the movable member from one position where the first seal member unseals the lid from the tank to another position where the first seal member is configured to seal the lid to the liquid tank. Thus, actuating the sealing assembly at step 790 may include unsealing the liquid reservoir from the ambient atmosphere and/or sealing the lid to the liquid tank.

At step 800, the process 700 includes increasing an amount of power supplied to the fan after further actuating the sealing assembly at step 790. In one example, the controller can periodically, at predetermined intervals, signal the power supply to increase a supply of power to the fan. As such, step 800 can occur in this example upon a next periodic increase following actuation of the sealing assembly at step 790.

At step 810, the process 700 includes measuring a speed of the fan. In one embodiment, measuring the speed of the fan can include measuring the speed of the fan at a third time and a fourth, different time. For instance, the third time could be after actuation of the sealing assembly in step 720 while the fourth time could be after further actuation of the sealing assembly in step 790. In this case, the third time could be when the sealing assembly is in a position that seals the liquid reservoir via the column from the ambient atmosphere (and thus blocks generated mist from leaving the humidifier) and the fourth time could be when the sealing assembly is in a position that permits fluid communication between the liquid reservoir and the ambient atmosphere. This can cause a relative decrease in fan speed. Accordingly, in such an example, the fan speed at the fourth time could be less than the fan speed at the third time.

At step 820, the process 700 includes maintaining power supplied to the fan and/or increasing power supplied to the atomizer. The controller can detect such a relative change in fan speed over time at step 810. If a relative change in fan speed does not exceed a predetermined amount (e.g., the predetermined amount that may be used in step 730) then the controller can act to maintain the amount of power supplied to the fan and/or increase power supplied to the atomizer. For instance, step 820 could include maintaining an amount of power to the fan similar to the increased amount supplied at step 800 and increasing an amount of power supplied to the atomizer in order to turn the atomizer on when it was tuned off at step 750.

Embodiments of the process 700 may help to provide a humidifier that is capable of safe guarding certain component parts, like fan and/or atomizer, by detecting when certain operational states exist. For instance, these steps can allow the humidifier to determine that the tank is being refilled with water, or cleaned, and thus that there is no need to run the fan and/or atomizer during this time. And, this can be done without requiring the user to input a command to the humidifier that it should be shut down during a time that the tank is to be refilled or cleaned. Instead, the sealing assembly can be actuated, such as to unseal the lid from the tank and seal the column from the ambient atmosphere, by a user and the humidifier can subsequently take action to safeguard certain component parts.

Various non-limiting exemplary embodiments have been described. It will be appreciated that suitable alternatives are possible without departing from the scope of the examples described herein. These and other examples are within the scope of the following numbered clauses:
1. A humidifier comprising:
   a base having a liquid reservoir, the base configured to generate mist;
   a fluid column in fluid communication with the liquid reservoir and selectively in fluid communication with an ambient atmosphere to deliver mist to the ambient atmosphere;
   a liquid tank coupled to the base and defining an interior volume, the liquid tank configured to provide liquid to the liquid reservoir;
   a lid selectively sealed to the fluid column and covering the liquid tank; and
   a sealing assembly coupled to the fluid column, the sealing assembly configured upon actuation to both seal the fluid column from the ambient atmosphere to prevent delivery of mist to the ambient atmosphere and unseal the lid from the fluid column.
2. The humidifier of clause 1, wherein the sealing assembly includes a first seal member, a second seal member, and a movable member, and wherein the movable member is configured to move upon actuation of the sealing assembly from a first position in which the first seal member is configured to seal the lid to the fluid column to a second position in which the second seal member is configured to seal the fluid column from the ambient atmosphere.
3. The humidifier of clause 2, wherein when the movable member is in the first position the first seal member is further configured to seal the fluid column from the interior volume of the liquid tank and the second seal member is configured to allow for fluid communication between the fluid column and the ambient atmosphere, and wherein when the movable member is in the second position the first seal member is configured to unseal the lid from the fluid column.
4. The humidifier of clause 2 or clause 3, wherein the fluid column is fixed in place relative to the movable member.
5. The humidifier of any one of the preceding clauses, wherein the fluid column extends within the interior volume of the liquid tank and is in fluid communication with the liquid reservoir at a first end of the fluid column and coupled to the sealing assembly at a second end of the fluid column.
6. The humidifier of any one of the preceding clauses, wherein the lid includes an outer perimeter and an inner perimeter, the outer perimeter selectively sealed to the liquid tank, the inner perimeter defining an opening in the lid at which the lid is selectively sealed to the fluid column.
7. The humidifier of clause 6, wherein an area of the opening defined in the lid is less than an area of the lid between the outer perimeter and the inner perimeter.
8. The humidifier of any one of the preceding clauses, wherein the base further comprises:
   an atomizer located in the liquid reservoir, the atomizer configured to generate mist; and
   a fan in fluid communication with the fluid column to deliver mist through the fluid column to the ambient atmosphere.
9. The humidifier of clause 8, wherein the base further comprises:
   a controller in signal communication with the fan, the controller configured to measure fan speed at a first time and a second time, and wherein the controller is configured to change a supply of power to the fan when a difference between fan speed at the first time and the second time exceeds a predetermined amount.
10. The humidifier of clause 9, wherein the second time is when the sealing assembly seals the fluid column from the ambient atmosphere.
11. A method, comprising:
   providing a humidifier that includes:
      a base with a liquid reservoir and a fan, the base configured to generate mist,
      a fluid column in fluid communication with the liquid reservoir to deliver mist to an ambient atmosphere, and
      a sealing assembly coupled to the fluid column;
   actuating the sealing assembly to a first position to seal the liquid reservoir from the ambient atmosphere;
   measuring a speed of the fan; and
   changing an amount of power supplied to the fan based on the measured speed of the fan.
12. The method of clause 11, wherein measuring the speed of the fan comprises measuring fan speed at a first time and a second time, and wherein changing the amount of power supplied to the fan comprises decreasing the amount of power supplied to the fan when a difference between fan speed at the first time and the second time exceeds a first predetermined amount.
13. The method of clause 12, wherein the second time is when the sealing assembly is in the first position.
14. The method of clause 12 or clause 13,
   wherein the base of the humidifier further comprises an atomizer in fluid communication with the liquid reservoir, the atomizer configured to generate mist,
   the method further comprising: when the difference between fan speed at the first time and the second time exceeds the first predetermined amount, decreasing power supplied to the atomizer.
15. The method of any one of clauses 11 to 14, further comprising: actuating the sealing assembly from the first position to a second position, wherein actuating the sealing assembly to the second position comprises unsealing the liquid reservoir from the ambient atmosphere.
16. The method of clause 15, wherein measuring the speed of the fan comprises measuring fan speed at a first time and a second time, the second time being when the sealing assembly is in the second position.
17. The method of clause 16, wherein changing the amount of power supplied to the fan comprises increasing the amount of power supplied to the fan when a difference between fan speed at the first time and the second time exceeds a first predetermined amount.
18. The method of clause 16 or clause 17,
   wherein the base of the humidifier further comprises an atomizer in fluid communication with the liquid reservoir, the atomizer configured to generate mist,
   the method further comprising: when a difference between fan speed at the first time and the second time exceeds the first predetermined amount, increasing power supplied to the atomizer.
19. The method of any one of clauses 15 to 18,
   wherein the humidifier further includes a liquid tank coupled to the base and defining an interior volume, the liquid tank configured to provide liquid to the liquid reservoir,
   the method further comprising: when the sealing assembly is in each of the first position and the second position, the fluid column is sealed from the interior volume of the liquid tank.
20. The method of any one of clauses 15 to 18,
   wherein the humidifier further includes:
      a liquid tank coupled to the base and defining an interior volume, the liquid tank configured to provide liquid to the liquid reservoir, and
      a lid having an inner perimeter that defines an opening in the lid and an outer perimeter, the lid being removable from the liquid tank,
   wherein when the sealing assembly is actuated to the second position, the lid seals to the fluid column at its inner perimeter, and
   wherein when the sealing assembly is actuated to the second position, the lid seals to the liquid tank at its outer perimeter.

## Claims

1. A humidifier comprising:
a base having a liquid reservoir, the base configured to generate mist;
a fluid column in fluid communication with the liquid reservoir and selectively in fluid communication with an ambient atmosphere to deliver mist to the ambient atmosphere;
a liquid tank coupled to the base and defining an interior volume, the liquid tank configured to provide liquid to the liquid reservoir;
a lid selectively sealed to the fluid column and covering the liquid tank; and
a sealing assembly coupled to the fluid column, the sealing assembly configured upon actuation to both seal the fluid column from the ambient atmosphere to prevent delivery of mist to the ambient atmosphere and unseal the lid from the fluid column.

2. The humidifier of claim 1, wherein the sealing assembly includes a first seal member, a second seal member, and a movable member, and wherein the movable member is configured to move upon actuation of the sealing assembly from a first position in which the first seal member is configured to seal the lid to the fluid column to a second position in which the second seal member is configured to seal the fluid column from the ambient atmosphere.

3. The humidifier of claim 2, wherein when the movable member is in the first position the first seal member is further configured to seal the fluid column from the interior volume of the liquid tank and the second seal member is configured to allow for fluid communication between the fluid column and the ambient atmosphere, and wherein when the movable member is in the second position the first seal member is configured to unseal the lid from the fluid column.

4. The humidifier of any one of the preceding claims, wherein the fluid column extends within the interior volume of the liquid tank and is in fluid communication with the liquid reservoir at a first end of the fluid column and coupled to the sealing assembly at a second end of the fluid column.

5. The humidifier of any one of the preceding claims, wherein the lid includes an outer perimeter and an inner perimeter, the outer perimeter selectively sealed to the liquid tank, the inner perimeter defining an opening in the lid at which the lid is selectively sealed to the fluid column.

6. The humidifier of any one of the preceding claims, wherein the base further comprises:
an atomizer located in the liquid reservoir, the atomizer configured to generate mist; and
a fan in fluid communication with the fluid column to deliver mist through the fluid column to the ambient atmosphere.

7. The humidifier of claim 6, wherein the base further comprises:
a controller in signal communication with the fan, the controller configured to measure fan speed at a first time and a second time, and wherein the controller is configured to change a supply of power to the fan when a difference between fan speed at the first time and the second time exceeds a predetermined amount.

8. A method, comprising:
providing a humidifier that includes:
a base with a liquid reservoir and a fan, the base configured to generate mist,
a fluid column in fluid communication with the liquid reservoir to deliver mist to an ambient atmosphere, and
a sealing assembly coupled to the fluid column;
actuating the sealing assembly to a first position to seal the liquid reservoir from the ambient atmosphere;
measuring a speed of the fan; and
changing an amount of power supplied to the fan based on the measured speed of the fan.

9. The method of claim 8, wherein measuring the speed of the fan comprises measuring fan speed at a first time and a second time, and wherein changing the amount of power supplied to the fan comprises decreasing the amount of power supplied to the fan when a difference between fan speed at the first time and the second time exceeds a first predetermined amount.

10. The method of claim 9, wherein the second time is when the sealing assembly is in the first position.

11. The method of any one of claims 8 to 10, further comprising: actuating the sealing assembly from the first position to a second position, wherein actuating the sealing assembly to the second position comprises unsealing the liquid reservoir from the ambient atmosphere.

12. The method of claim 11, wherein measuring the speed of the fan comprises measuring fan speed at a first time and a second time, the second time being when the sealing assembly is in the second position.

13. The method of claim 12, wherein changing the amount of power supplied to the fan comprises increasing the amount of power supplied to the fan when a difference between fan speed at the first time and the second time exceeds a first predetermined amount.

14. The method of claim 9 or claim 12,
wherein the base of the humidifier further comprises an atomizer in fluid communication with the liquid reservoir, the atomizer configured to generate mist,
the method further comprising: when a difference between fan speed at the first time and the second time exceeds the first predetermined amount, increasing power supplied to the atomizer.

15. The method of any one of claims 11 to 14,
wherein the humidifier further includes a liquid tank coupled to the base and defining an interior volume, the liquid tank configured to provide liquid to the liquid reservoir,
the method further comprising: when the sealing assembly is in each of the first position and the second position, the fluid column is sealed from the interior volume of the liquid tank.
